# EUROPEAN PATENT APPLICATION

(11) **EP 2 709 296 A1**
(43) Date of publication of application: **19.03.2014**
(21) Application number: 13275209.8
(22) Date of filing: 12.09.2013
(51) Int. Cl.: H04B 10/80, H02H 3/02

(54) **Opto-coupler speedup circuit**

(30) Priority: 13.09.2012 AU 2012101414
(71) Applicant: Gerard Lighting Pty Ltd, 5067 Rose Park South Australia (AU)
(72) Inventor: Vanderzon, James, Rose Park, South Australia 5067 (AU)
(74) Representative: Vigars, Christopher Ian

(57) **Abstract**

A circuit to speed up the turn off time of an opto-coupler without requiring large currents. A first aspect determines a switch-off threshold in the early part of the rising photo-transistor collector voltage. A second aspect uses feedback to inject additional photo-transistor collector current resulting in additional photo-transistor base current and subsequent discharge of the photo-transistor collector-base capacitance. A third aspect uses capacitive feedback to further reduce switching time.

## Description

### FIELD OF THE INVENTION

This invention relates to a circuit for enhancing the operation of an opto-coupler, in particular a circuit to decrease the turn off time of an opto-coupler.

### BACKGROUND TO THE INVENTION

Opto-couplers are popular for providing galvanic isolation in circuits and as with many circuit elements there are trade-offs to consider when using them. High speed operation is often desirable, but this usually comes with a premium in device cost and high current consumption.

Opto-couplers are normally specified by the maker with turn on and turn off times that rely on significant photo-transistor currents. These high currents involve small value resistors typically in the emitter or collector side of the photo-transistor. Use of high currents in the photo-transistor in turn translates into high LED currents (through the Current Transfer Ratio - CTR). When these large currents are not available, the opto-couplers are usually much slower than the data sheet suggests.

The photo-transistor in an opto-coupler is turned on by received photons (instead of a base current). Photo-transistors normally have a large junction to get a large photo-sensitive area, and this brings an associated large base-collector capacitance. Once the transistor has been turned on, the turn off requires the discharge of the base-collector capacitance. The only discharge path is through the transistor base, so when the LED turns off the (inherent) capacitor supplies base current, and the transistor stays turned on. The large base-collector capacitance is magnified by the transistor gain (the so called Miller Effect). The net effect is that there is usually a fast response for LED turn on and photo-transistor response, but a slow turn off while the photo-transistor collector-base capacitance is discharged.

A traditional solution to obtaining a fast response time is to use a small collector resistor, resulting in a large collector current (sometimes 10's of mA). This in turn requires a large base current, and so quickly discharges the base capacitance. This however, requires a commensurately large opto-LED current.

A second traditional solution is to add an extra terminal and bring the opto-transistor base outside of the opto-coupler package. A large value base resistor can be added, this will help bleed off some of the charge in the base capacitor through the base resistor instead of through the base. This solution is also undesirable because some of the photons used to make the base current are lost through this external resistor during normal "ON" state operation leading to a reduction in the Current Transfer Ratio of the coupler. This degradation is prone to variation between devices making compensation difficult. A further disadvantage is that this approach brings the sensitive base connection outside of the opto-coupler making the photo-transistor circuit sensitive to received electro-magnetic interference.

The object of this invention is to provide an opto-coupler circuit that alleviates the above problems, or at least provides the public with a useful alternative.

### SUMMARY OF THE INVENTION

Therefore in one form of the invention there is proposed an output circuit for an opto-coupler with an open collector output comprising a pullup resistor connecting the open collector output to a positive voltage supply rail, a buffer circuit driven by the open collector output, and a current mirror circuit, wherein the buffer circuit provides the input to the current mirror and the output of the current mirror is connected to the open collector output of the opto-coupler.

It should be noted that any one of the aspects mentioned above may include any of the features of any of the other aspects mentioned above and may include any of the features of any of the embodiments described below as appropriate.

### BRIEF DESCRIPTION OF THE DRAWINGS

The accompanying schematic drawings, which are incorporated in and constitute a part of this specification, illustrate various implementations of the invention and, together with the description, serve to explain the advantages and principles of the invention.

Figure 1 is a circuit diagram of an opto-coupler speedup circuit of the invention incorporating a first and second aspect of the invention.

Figure 2 is a circuit diagram of an opto-coupler speedup circuit of the invention incorporating the circuit of Figure 1and a third aspect of the invention.

### DETAILED DESCRIPTION OF THE INVENTION

The following detailed description of the invention refers to the accompanying schematic drawings. Wherever possible, the same reference numbers will be used throughout the schematic drawings and the following description to refer to the same and like parts. Incidental circuitry well known in the art, for example decoupling components, have been omitted for the purposes of clarity.

The invention is in essence a circuit to speed up the turn off time of an opto-coupler without requiring large currents. A first aspect determines a switch-off threshold in the early part of the rising photo-transistor collector voltage. A second aspect uses feedback to inject additional photo-transistor collector current resulting in additional photo-transistor base current and subsequent discharge of the photo-transistor collector-base capacitance. A third aspect further reduces the switch-off threshold via capacitive feedback.

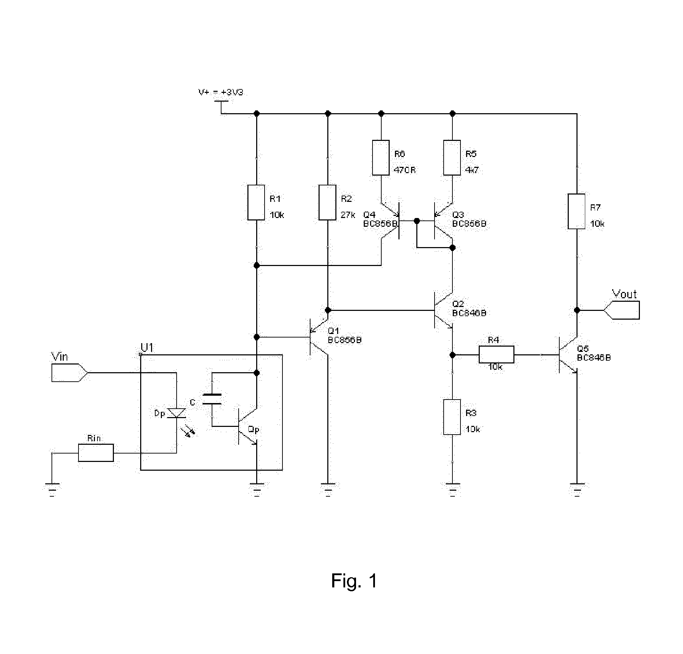

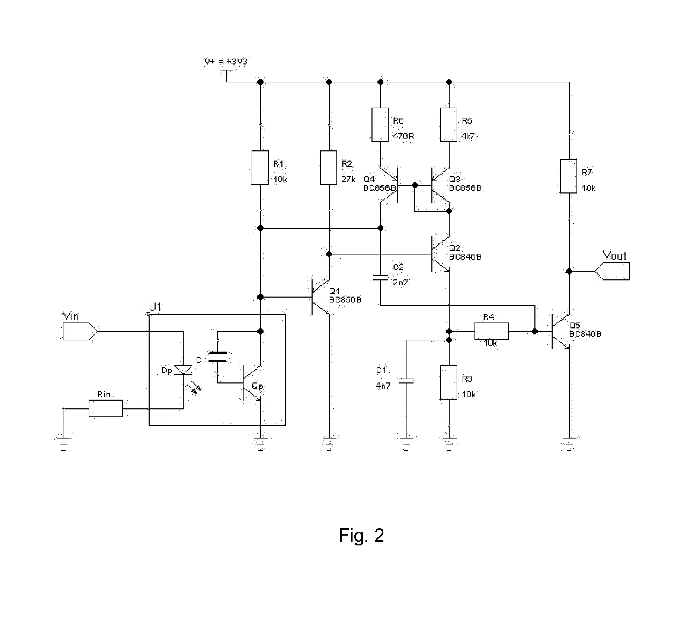

The circuit of Figure 1 is described first which incorporates the first two aspects of the invention. The circuit of Figure 2 incorporates the third aspect of the invention which is an addition to the circuit of Figure 1.

An opto-coupler is shown in Figure 1 as U1 and comprises LED Dp and photo-transistor Qp. The collector-base capacitance of the phototransistor Qp is represented by C. The opto-coupler is driven by the signal Vin and the input current of the opto-coupler is limited by Rin. The output of the opto-coupler is pulled to V+ = 3.3 Volts by R1. The capacitance C slows down the operation of the opto-coupler, tending to keep the phototransistor Qp turned on. The remaining circuitry is designed to overcome the effect of C and speed up the opto-coupler.

The output of the opto-coupler is first buffered by Q1 which is an inverted emitter follower. Q2 is a conventional emitter follower which controls the current through the current multiplier transistor Q3. Q2 also provides base drive to Q5. Q3 and Q4 form a current multiplier, with the collector current of Q4 set by the collector current of Q3 multiplied by the ratio of R5 to R6. Q5 is a final inverting output stage.

Steady state operation of the circuit with the opto-coupler turned on is as follows. If it is assumed that Qp has enough base current (due to photons) to be switched on (saturation), then its collector will be at about ground or very close. Q1 in turn will be turned on and its emitter will sit at approximately Vbe above ground, as will the base of Q2. The emitter of Q2 will be approximately Vbe below its base; that is approximately at ground voltage. This in turn means there is no current flowing through Q3, and there is no base current for Q5. Q5 is off and Vout is high. With no current through Q3, there is also no current through Q4 so the collector current in Qp is determined only by R1.

Steady state operation of the circuit with the opto-coupler turned off is as follows. With Qp turned off, its collector voltage is that of the high rail. Consequently Q1 is turned off because its base is high (and Vbe will essentially by 0). The base of Q2 is pulled up via R2 which supplies base current. The emitter of Q2 is about Vbe below the voltage rail. The current through Q2 is set by R3 and the base current used by Q5. Provided the Q2 emitter voltage is > Vbe of Q5, then Q5 is turned on, which pulls Vout low. The current flowing through Q2 in turn sets the Q3 current, and hence the corresponding Q4 current (set by the ratio of R5/R6). However because Qp is turned off, the current through R1 is 0, and there is also no Q4 and R6 current.

When switching the opto-coupler from on to off, the photo-transistor collector-base capacitor, C, will initially be charged and continue to provide base current for Qp which keeps it turned on with collector current set by R1. The discharge rate of C at this point is governed by the Qp base current, which is approximately Ic/β (ic = collector current of Qp, and β = current gain of Qp = hFE).

In order to discharge C quickly (the only path being through the base of Qp), we desire setting a higher collector current for Qp, which to be sustained requires more base current, and this depletes the charge in C faster. As C depletes, Qp leaves saturation, its collector voltage rises (and so the current through R1 drops). The rising Qp collector voltage means that the emitter follower Q1 base voltage rises, this in turn raises the emitter follower Q2 base voltage, and hence Q2 emitter voltage rises above 0.

As the Q2 emitter voltage rises, the current is set by R3, and when the emitter is approximately Vbe, Q5 turns on (pulling the output Vout low). The effect is that as the Q2 emitter voltage rises, the current also rises.

The cumulative effect is that when Qp collector has risen to about Vbe above ground the output will be switched. This causes an earlier switching of the output than would occur in a conventional circuit where the Qp collector would need to reach about Vcc/2 (approx.) when driving a logic or Schmitt Trigger input, for example into a microprocessor. This earlier switching during a rising exponential means that the switch point happens earlier (in time) and gives a speed up.

In addition, however, the current through Q2 uses Q3 & Q4 as a current multiplier where additional current flows through Q4, and supplements the current through R1. This increases the Qp collector current, which requires a higher Qp base current, and depletes C faster resulting in a faster rising Qp collector voltage.

The circuit as shown in Figure 1 may be implemented with various component values and achieve similar results. The following is one example of component choices using a supply voltage V+ = 3.3 Volts.

The transistors used are not critical, BC856B transistors are chosen for the PNP transistors Q1, Q3 and Q4 and BC846B transistors chosen for the NPN transistors Q2 and Q5. It can be safely assumed that these transistors will provide a current gain,β, of at least 50 and will have a worst case base-collector capacitance of approximately 5pF.

R1 is chosen for low current operation, a value R1 = 10k is used which gives a Qp collector current when Qp is turned on of 3.3 V/10k = 330µA. A low collector current is chosen as it allows for wide variations in opto-coupler CTR (Current Transfer Ratio) without affecting circuit performance. It also allows a small LED current through Dp, meaning that the current required from the input Vin can be smaller than might otherwise be the case.

R7 is only used to provide a load for Q5 in its inverting stage, its value is not critical. A value of R7 = 10k is chosen to keep circuit currents low. This gives a collector current Ic5 = 3.3V/10k = 330µA and in turn a base current Ib5 = Ic5 / β = 330µA/50 = 6.6µA.

R3 sets the current through Q2, which varies because it is an emitter follower. In order for Q5 to turn on early, when Ve of Q2 is about 0.5 to 0.7 V, there should be enough Q2 emitter current that it dominates the required Q5 base current. That is Ie2 >> Ib5 or Ie2 >> 6.6µA. With Ie2 = Ve2 / R3 this gives 6.6µA << 0.5 / R3 or R3 << 75k. A value of R3 = 10k is chosen. This in turn will give Ie2 = 0.5V/10k = 50µA.

R4 in series with R3 sets the time constant to discharge the collector-base capacitance of Q5. A turn off time of 1 µs is desirous, assuming that this is equivalent to 5 time constants gives 5 x 5pF x (R4 + R3) <= 1 µs, or R4 <= 10k. A value of R4 = 10k is chosen.

R5 is chosen ultimately to support the operation of Q5. To provide ample margin for operation of Q5 it is desirable for the emitter of Q2 to be able to reach 1 Volt. This will give a current Ie2 = 1.0V/R3 = 1.0V/10k = 100µA. The current in R5 will be approximately the same. As the collector and base of Q3 are joined, the collector of Q3 will be approximately Vbe above the emitter of Q2, that is 1.0 V + 0.7V = 1.7V. Allowing for a minimum supply voltage V+ = 3.0 V will give a maximum voltage that can allowed across R5 of 3.0V - 1.7V = 1.3V. This gives R5 < 1.3V/100uA, or R5 < 13k. Choosing R5 = 4k7 will give ample margin.

The common bases of Q3 and Q4 mean that as the base voltage is changed (by Q2 and the current flowing through Q3 + R5), the Q4 current is set by R6. Common Vbe for Q4 and Q3 mean that the current in Q4 is set by the ratio R5/R6. It is desirable to use a dual transistor package for Q3 and Q4, where the Vbe match that is expected will also track with temperature change.

R6 is chosen such that Q4 will provide significant current to help discharge the opto-coupler collector-base capacitance as the opto-coupler is switched off. It has been shown above that as the opto-coupler is switching off the opto-coupler collector current is 330 µA, and the current in Q2 soon after turn off is approximately 50 µA. Choosing R5 /R6 = 10 will result in a Q4 current of 10 x 50µA = 500µA which is significant in comparison to the 330µA. As the opto-coupler turns off the Qp collector voltage will rise, turning off Q1 and allowing Q2 to turn on which in turn provides more current via Q3 and Q4 thus accelerating the turn off. When Q2 emitter voltage is 1V, with R3 = 10K, the Q2 and Q3 current is 100 µA, and the additional Qp collector current from Q4 is 10 x 100µA = 1 mA. The additional current provided by Q4 will initially ramp up, but then ramp down as the opto-coupler turns off further.

Finally R2 is chosen to supply sufficient base current for Q2 but is otherwise not very important. To support a Q2 collector current, Ic2, of 100µA a base current of Ic2/β or 100µA/50 = 2µA is required. Allowing for a minimum supply voltage V+ = 3.0V, Q2 Vbe of 0.7V and Q2 emitter operating at 1.0V gives R2 < 3.0V - 0.7V - 1.0V / 2µA, or R2 < 650k. A value of R2 = 27k can be safely chosen.

Figure 2 shows the circuit of Figure 1 with capacitors C1 and C2 added to further speed up the circuit in accordance with a third aspect of the invention. Capacitor C1 is added to the emitter follower Q2 to increase transient gain and therefore greater feedback current to the opto-coupler transistor. Capacitor C2 is added to enable a degree of responsiveness to opto-coupler transistor dv/dt, in addition to voltage amplitude alone. The combined result is that the output transistor is now driven on at a lower point in the rising voltage curve of the opto-collector voltage.

With C1 and C2 fitted the operation of the circuit when the opto-coupler switches on is as follows. With the opto-coupler initially not driven, approximate initial conditions are high voltages appearing at Q1 base (3V3), hence Q2 base (3V), hence C1 (2V3), so that Q5 base is driven to hold the output Vout low. Capacitor C2 has initial condition of rail voltage (3V3) via R1, where other end is at about 0.5V according to Q5 base voltage. Note that no dc current path exists yet for the current-mirror output Q4 collector. However Q2 is conducting to pull current both through Q3 and Q4, thus stabilizing the above Q2 voltage conditions. At the point when the opto-LED is driven and the associated collector begins pulling down Q1 base, Q1 emitter follows, so that Q2 conduction will get cut-off due to the effect of C1 voltage holding Q2 emitter voltage with a longer time-constant than rate at which opto-transistor turns on. Additionally, during the falling transition of the opto-collector, Q5 drive gets cut-off due to the application of a negative-going signal coupled by C2, hence Q5 collector output immediately goes high. With the opto-transistor now in saturation, C1 eventually discharges to the point where Q2 starts to conduct again - at a relatively low current as defined by emitter resistor R3 value in conjunction with the prevailing saturation voltage of the opto-transistor (assuming also that Q1 & Q2 base-emitter voltages are similar). The current mirror arrangement of Q3/Q4 amplifies the current from Q2 by a factor of 10 - according to R5/R6 resistor ratio, which is added to the opto-collector current already provided by R1. This additional current from Q4 is several times smaller in comparison to that provided by R1, so that the opto-transistor saturation voltage does not noticeably rise. During opto-transistor saturation, the voltage across also C2 diminishes due to the discharge path through R4, so that a small positive residual voltage appears at the base of Q5. The ratio of C1/C2 is maintained at about 2:1 so that the net voltage at Q5 base does not momentarily approach transistor turn-on voltage during the discharge period for these capacitors. The minimum value of capacitors C1 & C2 is selected to result in a discharge time-constants of about 20µs - which is several times longer than the typical falling transition time of an opto-collector - as necessary for opto-collector transition to effectively appear as a step function.

The circuit operation when the opto-coupler switches off is as follows. With the opto-coupler driven, approximate initial conditions are low voltages appearing at Q1 base (100mV), hence Q2 base (600mV), hence C1 (100mV), so that Q5 base is driven to hold the output Vout low. Capacitor C2 has initial condition of close to 0V - as outlined above. Capacitor C1 has initial condition of 100mV nominal - as noted earlier. The initial emitter current of Q2 is around 10µA, which results in about 100µA supplied from Q4 collector to the opto-coupler. At the point when the opto-LED is no longer driven and the collector begins being pulled up, mostly by R1 and initially less significantly by Q4 current, then Q1 emitter follows, so that Q2 conduction rapidly increases due to the effect of C1 voltage holding Q2 emitter at voltage close to zero. The increased Q2 conduction results in Q4 delivering amplified current to the opto-collector, with regenerative effect of speeding up the rise of opto-collector voltage. The now more significant current supplied by Q4 is also coupled to Q5 base via C2, so that Q5 rapidly turns on to cause fall of Q5 output collector voltage. This circuit arrangement is capable of causing Q5 rising output transition to occur prior to opto-transistor Vce reaching typical Vbe potential, however this remains somewhat dependent on opto-transistor junction capacitance i.e. the improvement factor diminishes with inherently slow opto-couplers.

This new speed up circuit requires only very low photo-transistor collector currents and LED currents and is well suited to low power applications. It also means that designs can use a wider range of opto-couplers with a greater range of CTRs, potentially allowing cheaper opto-couplers to be used, or allowing a wider range of components to be selected, lowering production costs.

Further advantages and improvements may very well be made to the present invention without deviating from its scope. Although the invention has been shown and described in what is conceived to be the most practical and preferred embodiment, it is recognized that departures may be made therefrom within the scope and spirit of the invention, which is not to be limited to the details disclosed herein but is to be accorded the full scope of the claims so as to embrace any and all equivalent devices and apparatus. Any discussion of the prior art throughout the specification should in no way be considered as an admission that such prior art is widely known or forms part of the common general knowledge in this field.

In the summary of the invention, except where the context requires otherwise due to express language or necessary implication, the word "comprising" is used in the sense of "including", i.e. the features specified may be associated with further features in various embodiments of the invention.

## Claims

1. An output circuit for an opto-coupler with an open collector output comprising:
a pullup resistor connecting the open collector output to a positive voltage supply rail;
a buffer circuit driven by the open collector output; and
a current mirror circuit, wherein:
the buffer circuit provides the input to the current mirror; and
the output of the current mirror is connected to the open collector output of the opto-coupler.

2. An output circuit as in claim 1 wherein the buffer circuit comprises a first emitter follower driving a second emitter follower, and wherein the second emitter follower provides the input to the current mirror.

3. An output circuit as in claim 2 further comprising an emitter resistor in the second emitter follower.

4. An output circuit as in claim 3 further comprising a common emitter circuit driven by the second emitter follower.

5. An output circuit as in claim 4 further comprising a first and second feedback capacitor, wherein:
said first capacitor connects the base of the common emitter circuit with the open collector output of the opto-coupler; and
said second capacitor bypasses the emitter resistor of the second emitter follower circuit.
